# EUROPÄISCHE PATENTSCHRIFT

(11) **EP 4 673 357 B1**
(45) Veröffentlichungstag und Bekanntmachung des Hinweises auf die Patenterteilung: **10.06.2026**
(21) Anmeldenummer: 25717604.0
(22) Anmeldetag: 04.04.2025
(51) Int. Cl.: B62D 15/02, B62D 7/15, B62D 6/00

(54) **VERRINGERUNG EINER SENSOR-SICHTVERDECKUNG ZUR ABSICHERUNG EINES SPURWECHSELS EINES FAHRZEUGS**
REDUCING THE VISUAL DEAD ZONE OF A SENSOR IN ORDER TO SAFEGUARD A LANE CHANGING PROCESS OF A VEHICLE
RÉDUCTION DE LA ZONE MORTE VISUELLE D'UN CAPTEUR AFIN DE SÉCURISER UN PROCESSUS DE CHANGEMENT DE VOIE D'UN VÉHICULE

(30) Priorität: 10.05.2024 DE 102024001515
(43) Veröffentlichungstag der Anmeldung: 07.01.2026
(73) Patentinhaber: Mercedes-Benz Group AG, 70372 Stuttgart (DE)
(72) Erfinder: HAGEDORN, Tjark, 71032 Böblingen (DE)
(74) Vertreter: Novagraaf Group
(86) Internationale Anmeldenummer: PCT/EP2025/059263
(87) Internationale Veröffentlichungsnummer: WO 2025/233070

(56) Entgegenhaltungen:
- DE-A1- 102013 016 908
- US-A1- 2018 174 467
- US-A1- 2020 406 969
- US-B2- 11 220 266

## Beschreibung

Die Erfindung betrifft ein System zum Überprüfen eines geplanten Spurwechsels eines Fahrzeugs mit Allradlenkung auf einer mehrspurigen Straße, sowie ein Fahrzeug mit einem solchen System.

Insbesondere auf einer Autobahn mit zumindest einer Richtungsfahrbahn, die zwei oder mehr parallele Fahrspuren mit gleicher Fahrtrichtung aufweist, ist bei einem Überholvorgang durch ein Fahrzeug von einer tendenziell langsameren auf eine tendenziell schnellere Spur zumindest vorübergehend zu wechseln. Dabei ist im Betrieb des Fahrzeugs darauf zu achten, dass auf der tendenziell schnelleren Spur ausreichend Abstand zu einem hinter dem eigenen Fahrzeug nachfolgenden Verkehrsteilnehmer besteht. Dieser Abstand sollte insbesondere abhängig von der Geschwindigkeitsdifferenz zwischen dem nachfolgenden Verkehrsteilnehmer und dem eigenen Fahrzeug sein, sodass ein Abbremsen des nachfolgenden Verkehrsteilnehmers als Reaktion auf das Ausscheren des eigenen Fahrzeugs möglichst vermieden wird. Die zu beachtende Abhängigkeit des Abstands von der Geschwindigkeit rührt daher, dass mit niedrigerem Abstand und höherer Geschwindigkeit des nachfolgenden Verkehrsteilnehmers zum eigenen Fahrzeug die Zeit bis zum Erreichen des eigenen Fahrzeugs durch den nachfolgenden Verkehrsteilnehmer für einen gegebenen Abstand zueinander kürzer wird.

Dieser Zusammenhang ist von einem menschlichen Fahrer bei einer manuellen Fahrzeugführung zu berücksichtigen. Ebenso ist dieser Umstand zu berücksichtigen, wenn hochautomatisierte Fahrzeuge entwickelt und ausgelegt werden, welche in der Lage sind, einen solchen Überholvorgang wie oben beschrieben selbstständig, d. h. durch maschinelle Führung, auszuführen.

Wie auch die Sichtbarkeit nach hinten gegen die Hauptfahrtrichtung auf schnell herannahende Verkehrsteilnehmer in ausreichender Entfernung beim manuellen Fahren häufig ein limitierender Faktor in der optimalen Ausführung dieser Prinzipien ist, so sind auch bei automatisierten Fahrzeugen Sensoren mit nur begrenzter Reichweite verfügbar. Zudem kann die Problematik auftreten, dass ein weiterer Verkehrsteilnehmer hinter dem eigenen Fahrzeug das Sichtfeld eines Sensors des eigenen Fahrzeugs wegen Verdeckung einschränken kann. Auch dadurch verringert sich somit die Reichweite einer ADAS Sensorik des eigenen Fahrzeugs. Die Verfügbarkeit eines automatisierten Spurwechsels verringert sich somit. Im Stand der Technik sind Methoden bekannt, um einen solchen Spurwechsel eines Fahrzeugs für einen manuellen Fahrer zu vereinfachen:
Die DE 10 2013 226 773 A1 betrifft in diesem Zusammenhang eine Vorrichtung zum Unterstützen eines Kurswechsels eines Fahrzeugs, mit folgenden Merkmalen: Eine Erfassungseinrichtung zum Erfassen eines Abstands sowie einer Geschwindigkeit wenigstens eines zu dem Fahrzeug rückwärtigen Fahrzeugs; und eine Anzeigeeinrichtung zum Anzeigen eines Hinweises auf den erfassten Abstand und die erfasste Geschwindigkeit des rückwärtigen Fahrzeugs.

Die DE 10 2013 016908 A1 beschreibt ein Verfahren zum Betrieb eines Fahrzeuges mit einer Vorderachslenkung zum Lenken von Vorderrädern und einer Hinterachslenkung zum Lenken von Hinterrädern, wobei bei einem ermittelten beabsichtigen Fahrspurwechsel des Fahrzeuges die Hinterräder gleichsinnig zu den Vorderrädern automatisch derart eingeschlagen werden, dass das Fahrzeug beim Fahrspurwechsel im Wesentlichen parallel von einer Fahrspur in eine andere Fahrspur bewegt wird.

Die US 11 220 266 B2 offenbart ein Verfahren zum zumindest teilweisen Freigeben des Sichtfelds eines Kraftfahrzeugs. Das Verfahren umfasst ein Lokalisieren anderer Fahrzeuge auf der aktuellen Fahrspur des Kraftfahrzeugs im vorderen und/oder hinteren Bereich des Kraftfahrzeugs durch ein Sensorsystem des Kraftfahrzeugs und ein Ermitteln, ob mindestens eines der anderen Fahrzeuge das Sichtfeld des Kraftfahrzeugs auf der aktuellen Fahrspur zumindest teilweise blockiert. Wenn die Blockierung des Sichtfelds reduziert werden soll, erfolgt eine Aufforderung an die anderen Fahrzeuge durch eine Kommunikationseinrichtung des Kraftfahrzeugs.

Aus der US 2018/174467 A1 ist eine Fahrunterstützungsvorrichtung mit einer Steuereinheit bekannt, die Informationen über ein hinter dem eigenen Fahrzeug fahrendes Fahrzeug auf derselben Fahrspur erfasst.

Die US 2020/406969 A1 offenbart ein Verfahren zum Überprüfen eines geplanten Spurwechsels eines Fahrzeugs mitAllradlenkung auf einer mehrspurigen Straße. Das Verfahren umfasst den Empfang von Informationen über die Position eines Objekts in Längsrichtung vor dem Fahrzeug von mindestens einem von mehreren mit dem Fahrzeug verbundenen Sensoren, die Bestimmung einer Abfolge von Steuereingaben für einen bestimmten Zeithorizont zur Vermeidung einer Kollision zwischen dem Fahrzeug und dem Objekt basierend auf einer Einschränkung und der Position des Objekts. Weiter umfasst das Verfahren die Bestimmung der Abfolge von Steuereingaben einschließlich der Minimierung des maximalen Schräglaufwinkels des Fahrzeugs während des der Einschränkung unterliegenden Zeithorizonts und die Veranlassung eines Fahrzeugsteuerungssystems, basierend auf der Abfolge von Steuereingaben ein Fahrzeugmanöver auszuführen.

Aufgabe der Erfindung ist es, die Sicherheit bei einem Spurwechsel eines Fahrzeugs auf einer Straße mit mehreren Fahrspuren zu erhöhen.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein System zum Überprüfen eines geplanten Spurwechsels eines Fahrzeugs mitAllradlenkung auf einer mehrspurigen Straße, aufweisend eine Sensoreinheit und eine Steuereinheit, wobei die Sensoreinheit mit ihrem Sichtbereich zum Erfassen eines sich von hinten an das Fahrzeug annähernden Verkehrsteilnehmers dient und zum Übermitteln von Sensordaten an die Steuereinheit ausgeführt ist, dadurch gekennzeichnet, dass die Steuereinheit dazu ausgeführt ist, eine Allradlenkung des Fahrzeugs so anzusteuern, dass mit im selben Drehsinn gegenüber dem Fahrzeug ausgelenkten Vorderrädern und Hinterrädern eine Versetzung einer Fahrspur der Hinterräder gegenüber einer Fahrspur der Vorderräder erfolgt, um durch eine aufgrund der Versetzung erzeugte Gierwinkelauslenkung des Fahrzeugs gegenüber einer kinematischen Fahrtrichtung den Sichtbereich der Sensoreinheit auf eine mit dem geplanten Spurwechsel angestrebte Fahrspur zu verschwenken. Die Gierwinkelauslenkung beschreibt vorliegend eine Auslenkung um einen Winkel *ψ* zwischen Fahrzeuglängsachse und dem kinematische Fahrtrichtungsvektor, d.h. der Bewegungsrichtung des Fahrzeugs bzw. des Fahrzeugschwerpunktes. Die Fahrzeuglängsachse ist dabei die Symmetrielinie des Fahrzeugs in Richtung seiner größten Ausdehnung, die bei Geradausfahrt der Fahrtrichtung entspricht.

Es wird vorausgesetzt, dass das Fahrzeug über eine Allradlenkung verfügt und die Vorderräder und die Hinterräder unabhängig zueinander in ihrem jeweiligen Lenkwinkel eingestellt werden können. Das bedeutet, dass die Vorderräder zu einer Hochachse des Fahrzeugs im Uhrzeigersinn gedreht werden können, während die Hinterräder gegen den Uhrzeigersinn gedreht werden, aber auch dass die Vorderräder und die Hinterräder zusammen im Uhrzeigersinn oder zusammen gegen den Uhrzeigersinn eingeschlagen werden. Es ist damit nicht nur die gegensinnige Lenkung aller Räder für verbessertes Kurvenverhalten des Fahrzeugs möglich, sondern auch der sogenannte Dackelgang, bei dem eine Fahrspur der Hinterräder und eine Fahrspur der Vorderräder versetzt zueinander ist sind somit eine körperfeste Längsachse des Fahrzeugs einen Auslenkungswinkel gegenüber seinem kinematischen Fahrtrichtungsvektor um eine Hochachse des Fahrzeugs aufweist, wobei der kinematische Fahrtrichtungsvektor die kinematische Fahrtrichtung angibt, welche wiederum eine Bewegungsrichtung des Fahrzeugs, d.h. der Bewegungsrichtung des Fahrzeugschwerpunktes gegenüber der Erde angibt. Durch diesen Dackelgang kann eine Gierwinkelauslenkung gegenüber dem kinematischen Fahrtrichtungsvektor erzeugt werden, d. h. eine körperfeste Längsachse des Fahrzeugs so weit ohne Wirkung auf eine Querbeschleunigung des Fahrzeugs auszuüben, wie die Räder maximal eingeschlagen werden können.

Solche Allradlenkungen sind aus dem Stand der Technik bekannt: Die DE 10 2018 220 575 B4 betrifft ein Verfahren zur Durchführung eines Fahrmanövers mit einem vierrädrigen Kraftfahrzeug, das lenkbare Vorderräder und lenkbare Hinterräder aufweist, aufweisend die bei fahrendem Fahrzeug durchzuführenden Schritte: Einleiten einer Kurvenfahrt durch Lenkeinschlag der Vorderräder, Erhöhung einer Gierrate des Fahrzeugs durch zusätzlichen Lenkeinschlag der Hinterräder in Gegenrichtung zum Lenkeinschlag der Vorderräder, Gegenlenken der Vorderräder bis deren Lenkeinschlag zumindest gleichsinnig zum Lenkeinschlag der Hinterräder ist, wobei zur Aufrechterhaltung einer Kurvenfahrt des Fahrzeugs in einem dem Driften ähnlichen Zustand der Lenkeinschlag der Vorderräder betraglich geringer eingestellt wird als der Lenkeinschlag der Hinterräder.

Durch eine entsprechende Ansteuerung einer aktuierten Allradlenkung am Fahrzeug ist es einer Steuereinheit möglich, eine solche Gierwinkelauslenkung des Fahrzeugs bewusst hervorzurufen, um beispielsweise einen am Heck des Fahrzeugs unbeweglich angeordneten und gegen die Fahrtrichtung mit ihrem Sichtbereich gerichteten Sensoreinheit um eine Hochachse des Fahrzeugs zu verschwenken und somit den Sichtbereich entsprechend zu verstellen, insbesondere bei einem geplanten Spurwechsel des Fahrzeugs hin zu einer angestrebten Fahrspur, welche mit dem Spurwechsel eingenommen werden soll. Damit kann vorteilhaft die Reichweite des Sichtbereichs der Sensoreinheit erhöht werden, insbesondere wenn hinter dem eigenen Fahrzeug auf der eigenen aktuell befahrenen Fahrspur ein weiterer Verkehrsteilnehmer fährt, der unter Umständen den Sichtbereich wegen Verdeckung einschränkt. Vorteilhaft ist es damit nicht notwendig, mehrere Sensoren am Heck des Fahrzeugs anzuordnen, um eine erweiterten Sichtbereich nach hinten gegen die Fahrtrichtung des Fahrzeugs zu erreichen. Weiterhin kann somit der Sichtbereich der Sensoreinheit in ihrem Öffnungswinkel klein gehalten werden, um die Sensoreinheit auf Reichweite zu optimieren.

Das System wird insbesondere vorteilhaft eingesetzt, wenn ein Fahrzeug mit dem System auf einer Richtungsfahrbahn mit zwei oder mehr parallelen Fahrspuren gleicher Fahrtrichtung unterwegs ist, beispielsweise auf einer Autobahn. Vorteilhaft ist das System vollständig im eigenen Fahrzeug integriert, insbesondere ist am Fahrzeug eine Sensoreinheit angeordnet, die mit ihrem Erfassungsbereich gegen die Hauptfahrtrichtung des Fahrzeugs nach hinten ausgerichtet ist, um von hinten, d. h. rückwärtige, sich nähernde Verkehrsteilnehmer erfassen zu können. Aber auch auf Straßen mit nur einer Fahrspur je Fahrtrichtung kann das System vorteilhaft eingesetzt werden, um bereits überholende und sich von hinten nähernde Verkehrsteilnehmer zu erkennen und einschätzen zu können.

Die Steuereinheit beobachtet zu diesem Zweck fortwährend, ob ein Spurwechsel des Fahrzeugs geplant ist. Dies kann beispielsweise dadurch festgestellt werden, dass der Fahrer des Fahrzeugs den Fahrtrichtungsanzeiger, auch genannt Blinker, betätigt; oder im Falle eines hochautomatisierten Fahrzeugs mit automatischer Fahrzeugführung, wenn ein Spurwechselbedarf von einem automatischen Fahrsteuerungssystem errechnet wird.

Von der Steuereinheit kann in einer ersten Ausführungsform bei einem solchen Manöver das Fahrzeug um eine vorbestimmte Gierwinkelauslenkung ausgelenkt werden, ohne zumindest durch dieses Manöver eine Quergeschwindigkeit relativ zu der aktuell befahrenen Fahrspur zu erzeugen. In einer weiteren Ausführungsform ist die Steuereinheit dazu ausgeführt, eine notwendige Gierwinkelauslenkung abhängig von Situationsparametern zu errechnen, bevorzugt erfolgt hierbei die Berechnung der gewünschten Gierwinkelauslenkung nach einem Einspurmodell. Zusätzlich zu den Situationsparametern wird bevorzugt von der Steuereinheit ein Öffnungswinkel des Sichtbereichs der Sensoreinheit berücksichtigt. Situationsparameter können die aktuelle Geschwindigkeit, eine Kurven-Krümmung der aktuellen Fahrspur, eine erwartete Geschwindigkeit des nachfolgenden Verkehrs, die Motorisierung des eigenen Fahrzeugs und Weiteres umfassen.

In einem Manöver zum Erreichen einer solchen Gierwinkelauslenkung des Fahrzeugs, welche bevorzugt keine Quergeschwindigkeit des Fahrzeugs relativ zur eigenen befahrenen Fahrspur auslöst, werden die Vorderräder und die Hinterräder entsprechend koordiniert zunächst gegeneinander in einem ersten Drehsinn und anschließend in gegenläufig dazu in einem zweiten Drehsinn eingeschlagen. Die Lenkung der Vorderräder und der Hinterräder erfolgt dabei durch die Steuereinheit angesteuert so koordiniert, dass sich eine Fahrspur der Hinterräder gegenüber einer Fahrspur der Vorderräder entlang einer gedachten Querverbindung eines linken und eines rechten Fahrspurrandes verschiebt. Die Fahrspuren der Vorderräder und der Hinterräder weisen auch bei einer stationär gehaltenen Gierwinkelauslenkung des Fahrzeugs gegenüber seinem kinematischen Fahrtrichtungsvektor relativ zur Erde parallele Bewegungsrichtung-Vektoren auf, so dass das Fahrzeug weiterhin in seiner aktuell gefahrenen Fahrspur verbleiben kann. Bei Kurvenfahrten, d. h. bei gekrümmten Fahrspuren, kann entsprechend der Krümmung gefolgt werden.

Gemäß einer vorteilhaften Ausführungsform ist die Steuereinheit dazu ausgeführt, die Allradlenkung des Fahrzeugs in einer ersten Phase zum entgegengerichteten Einschlagen der Vorderräder und der Hinterräder zum Aufbauen der Gierwinkelauslenkung des Fahrzeugs anzusteuern, und in einer zweiten, auf die ersten Phase folgenden, Phase die Allradlenkung anzusteuern, um die Vorderräder und die Hinterräder parallel zueinander auszurichten, um einen Einfluss der in der ersten Phase erzeugten Gierwinkelauslenkung auf eine Querbeschleunigung des Fahrzeugs zu verhindern.

Gemäß einer weiteren vorteilhaften Ausführungsform ist die Steuereinheit dazu ausgeführt, eine aktuelle Sichtweite der Sensoreinheit auf die mit dem Spurwechsel angestrebte Fahrspur zu ermitteln, die Sichtweite mit einem vorgegebenen Grenzwert zu vergleichen und nur bei Unterschreiten des vorgegebenen Grenzwerts die Allradlenkung des Fahrzeugs mit dem Ziel der Erreichung einer Gierwinkelauslenkung des Fahrzeugs gegenüber der kinematischen Fahrtrichtung anzusteuern.

Gemäß einer weiteren vorteilhaften Ausführungsform ist die Steuereinheit dazu ausgeführt, die Allradlenkung zum Beibehalten der Gierwinkelauslenkung des Fahrzeugs gegenüber der kinematischen Fahrtrichtung stationär für eine vorgegebene Zeitdauer anzusteuern.

Gemäß einer weiteren vorteilhaften Ausführungsform ist die Steuereinheit dazu ausgeführt, einen sicheren Spurwechsel zu erkennen, wenn kein sich dem eigenen Fahrzeug nähernder Verkehrsteilnehmer im Sichtbereich der Sensoreinheit nach Erzeugung der Gierwinkelauslenkung des Fahrzeugs erkannt wird, und bei Erkennung des sicheren Spurwechsels die Allradlenkung zum Durchführen des Spurwechsels anzusteuern.

Gemäß einer weiteren vorteilhaften Ausführungsform ist die Steuereinheit dazu ausgeführt, zum Durchführen des Spurwechsels einen Auslenkungswinkel der Hinterräder gegenüber dem Fahrzeug zumindest soweit zu verringern, bis sich die Versetzung der Fahrspur der Hinterräder gegenüber der Fahrspur der Vorderräder auflöst.

Gemäß einer weiteren vorteilhaften Ausführungsform ist die Steuereinheit dazu ausgeführt, die Gierwinkelauslenkung des Fahrzeugs gegenüber einer kinematischen Fahrtrichtung abhängig von einer vorgegebenen Sichtweite der Sensoreinheit auf die mit dem Spurwechsel angestrebte Fahrspur vorzugeben und die Allradlenkung entsprechend anzusteuern.

Gemäß einer weiteren vorteilhaften Ausführungsform ist die Steuereinheit dazu ausgeführt, die vorgegebene Sichtweite abhängig von einer höchstzulässigen Geschwindigkeit auf einem aktuell oder zukünftig vom Fahrzeug befahrenen Abschnitt der Straße, von einer aktuellen Geschwindigkeit des Fahrzeugs und/oder von einer erwarteten Geschwindigkeit eines auf der mit dem Spurwechsel angestrebten Fahrspur befindlichen weiteren Verkehrsteilnehmers relativ zum eigenen Fahrzeug zu ermitteln. Die Steuereinheit ermittelt die vorgegebenen Grenzwert für die Sichtweite, beispielsweise aus aktuellen Fahrdaten des oder anderer Fahrzeuge wie aktuelle oder zukünftige Fahrgeschwindigkeit, sowie Umgebungs- und Randbedingungen wie Art der befahrenen Straße d.h. Autobahn, Bundestrasse oder Landstraße, zulässige Höchstgeschwindigkeit auf der aktuell oder zukünftig befahrenen Straße, kurvige oder gerade Straßenabschnitte oder Wetterbedingungen. Beispielsweise ist auf einer Autobahn mit zulässiger hoher oder gar unbegrenzter Geschwindigkeit die durch den Grenzwert definierte erforderliche Sichtweite deutlich größer als auf einer Landstraße mit einer zulässigen Höchstgeschwindigkeit von 80 km/h, da zur Vermeidung einer Kollision aufgrund möglicher hoher Geschwindigkeitsunterschieden ein größere Abstand zu den anderen Fahrzeugen einzuhalten ist. Die vorgegebene Sichtweite ist dabei beeinflusst von der gefahrenen Geschwindigkeit des eigenen Fahrzeugs, d.h. je langsamer das eigene Fahrzeug auf einer Autobahn fährt, desto höher sind mögliche Geschwindigkeitsdifferenzen zum nachfolgenden Verkehr, d.h. desto höher ist zur Kollisionsvermeidung die vorgegebene Sichtweite. Erfindungsgemäß wird die Allradlenkung so angesteuert, dass sich eine Gierwinkelauslenkung einstellt, welche die erforderliche, d.h. vorgegebene Sichtweite ermöglicht, womit eine unnötig hohe Gierwinkelauslenkung vermieden wird. In analoger Weise ist eine erforderliche, vorgegebene Sichtweise gegebenenfalls durch Nebel, Verdeckung durch Objekte oder Kurven bestimmt oder abhängig.

Gemäß einer weiteren vorteilhaften Ausführungsform ist die Steuereinheit dazu ausgeführt, die Gierwinkelauslenkung des Fahrzeugs gegenüber der kinematischen Fahrtrichtung abhängig von einem aktuellen Kurvenradius der Straße zu vorzugeben.

Gemäß einer weiteren vorteilhaften Ausführungsform ist die Steuereinheit dazu ausgeführt, die Gierwinkelauslenkung des Fahrzeugs durch Ansteuerung der Allradlenkung für einen maximal vorgegebenen Zeitraum beizubehalten.

Bei einem hochautomatisierten Kraftfahrzeug kann der angestrebte Spurwechsel ohne Erkennung eines sicheren Spurwechsels innerhalb eines vorgegebenen Zeitraums verworfen werden.

Ein weiterer Aspekt der Erfindung betrifft ein Fahrzeug mit einem System wie oben und im Folgenden beschrieben, wobei der Sichtbereich der Sensoreinheit gegen eine Hauptfahrtrichtung des Fahrzeugs ausgerichtet ist, um sich von hinten an das Fahrzeug annähernde Verkehrsteilnehmer erfassen zu können.

Vorteile und bevorzugte Weiterbildungen des vorgeschlagenen Fahrzeugs ergeben sich durch eine analoge und sinngemäße Übertragung der im Zusammenhang mit dem vorgeschlagenen System vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist.

Es zeigen:
- Fig. 1:: Eine Situation, in der ein Sichtbereich einer Sensoreinheit zur Erkennung nachfolgenden Verkehrs unzureichend ist.
- Fig. 2:: Die Anpassung des Sichtbereichs nach Fig. 1 gemäß einem Ausführungsbeispiel der Erfindung.
- Fig. 3:: Die Anpassung der Fig. 2 im Detail.
- Fig. 4:: Eine Berechnung der Gierwinkelauslenkung zur Anpassung des Sichtbereichs nach Fig. 2

Die Darstellungen in den Figuren sind schematisch und nicht maßstäblich.

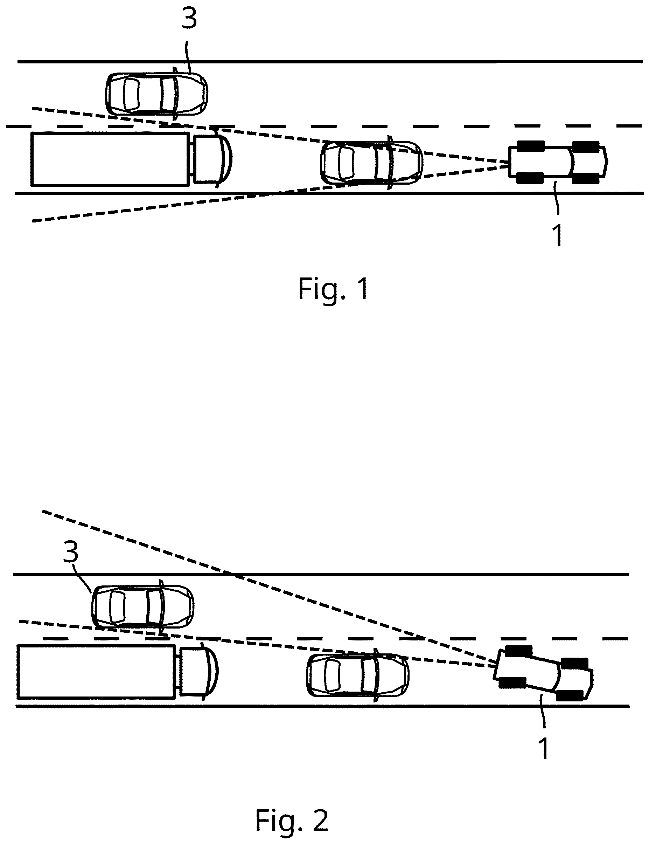

Fig. 1 zeigt eine Situation im öffentlichen Straßenverkehr auf einer Richtungsfahrbahn mit zwei parallelen Fahrspuren gleicher Fahrtrichtung, d. h. eine Richtungsfahrbahn einer Autobahn. In dieser Situation ist ein Fahrzeug 1 auf der rechten Fahrspur unterwegs. Beispielsweise wegen eines vorausfahrenden langsam fahrenden Objekts besteht der Wunsch auf die schnellere linke Fahrspur zu wechseln. Hierbei sind weitere Verkehrsteilnehmer 3 zu beachten, die sich mit einer höheren Geschwindigkeit als der des eigenen Fahrzeugs 1 an Letzteres annähern. Der Sicherheit halber darf nur auf die angestrebte linke Fahrspur gewechselt werden, wenn ein Mindestabstand zu einem weiteren Verkehrsteilnehmer 3 eingehalten werden kann, bevorzugt unter Berücksichtigung der Relativgeschwindigkeit des weiteren Verkehrsteilnehmers 3 zum eigenen Fahrzeug 1. Die mit ihrem Sichtbereich gegen die Hauptfahrtrichtung des Fahrzeugs 1 gerichtete Sensoreinheit dient dazu, diesen rückwärtigen Bereich hinter dem eigenen Fahrzeug 1 zu erfassen und zu prüfen, ob entsprechend großer Freiraum auf der angestrebten Fahrspur vorliegt, ohne dass in diesen innerhalb kurzer Zeit ein weiterer Verkehrsteilnehmer 3 einfährt. Wegen eines hinter dem eigenen Fahrzeug 1 fahrenden Objekts und einem beschränkten Öffnungswinkel des Sichtbereichs der Sensoreinheit kann jedoch unter Umständen ein nachfolgender Verkehrsteilnehmer 3 nicht erfasst werden und der Spurwechsel des eigenen Fahrzeug 1 zu einer kritischen Situation führen.

Fig. 2 zeigt einen Lösungsansatz zur Vermeidung einer wie unter Fig. 1 beschriebenen potenziell kritischen Situation. Wird ein Spurwechselbedarf erkannt, erfolgt zunächst eine initiale Freiraumprüfung mit der Sensoreinheit, deren Sichtbereich bei gierwinkelfreier Fahrt (Fahrzeuglängsachse zeigt im Wesentlichen in die gleiche Richtung wie der kinematische Fahrtrichtungsvektor gegenüber der Erde) zumindest einen Teil der angestrebten Fahrspur abdeckt, dies ist die initiale Freiraumprüfung. Der Freiraum ist definiert als Bereich der Zielspur, in dem sich kein überholender Verkehrsteilnehmer 3 befinden darf, um einen Spurwechsel sicher zu ermöglichen. Definiert ist dieser als vollständige Breite der angestrebten Fahrspur bis zur äußeren Markierungskante mit der erforderlichen Länge, die dem notwendigen Abstand zum überholenden Verkehrsteilnehmer entspricht unter Berücksichtigung von Differenzgeschwindigkeit und ggf. Verzögerung des überholenden Verkehrsteilnehmers 3. Ist diese Prüfung erfolgreich, wird die Gierwinkelauslenkung eingeleitet. Dabei wird ein Gierwinkel zur Fahrspur mittels geregeltem Lenkeingriff an der Hinter- und Vorderachse erzeugt. Die Quergeschwindigkeit bleibt währenddessen gleich null relativ zur eigenen, ursprünglichen Fahrspur des Fahrzeugs 1. Der eingeregelte Gierwinkel errechnet sich aus dem horizontalen Öffnungswinkel des Sichtbereichs der Sensoreinheit, dem notwendigen Abstand zum rückwärtigen, überholenden Verkehrsteilnehmer 3, errechnet aus ggf. gültiger Geschwindigkeitsbegrenzung und der zu berücksichtigenden maximalen Geschwindigkeit des möglicherweise überholenden Verkehrsteilnehmers, der Ego-Geschwindigkeit des eigenen Fahrzeugs 1 und dem Abstand zwischen dem Einbauort der Sensoreinheit zur Außenkante der Markierung der Zielspur unter Berücksichtigung des rückwärtigen Spurverlaufs, d. h. dessen Krümmung. Hierbei steuert eine Steuereinheit des Fahrzeug 1 eine aktuierte Allradlenkung des Fahrzeugs 1 so an, dass das Fahrzeug 1 auf seiner aktuellen Spur verbleibt, sich jedoch eine Gierwinkelauslenkung des Fahrzeugs 1 einstellt, ohne dass sein Schwerpunkt oder geometrischer Referenzpunkt eine Seitenbewegung aufgrund dieser Gierwinkelauslenkung ausführt. Das Fahrzeug 1 befindet sich somit in einem Dackelgang, bei welchem die Fahrzeuglängsachse von der kinematischen Fahrtrichtung, welche im Wesentlichen entlang einer Mittellinie zwischen einem linken und einem rechten Fahrspurrand führt, durch eine Auslenkung abweicht. Der körperfest am Heck des Fahrzeugs 1 angeordnete Sensor der Sensoreinheit, beispielsweise ein Radarsystem oder Lidarsystem, wird damit ebenfalls lateral bewegt und um eine Hochachse des Fahrzeugs 1 gedreht. Damit kann der nachfolgende Verkehrsteilnehmer 3 erfasst werden. Mit den gestrichelten Linien, ausgehend vom Heck des Fahrzeugs 1, ist in der Fig. 1 und in der Fig. 2 der jeweilige Sichtbereich der Sensoreinheit skizziert. Hierbei ist ersichtlich, wie durch die erzeugte Gierwinkelauslenkung des Fahrzeugs 1 der weitere Verkehrsteilnehmer 3 auf der angestrebten Fahrspur erfasst werden kann. Anschließend erfolgt der Spurwechsel mit sich kontinuierlich reduzierendem Gierwinkel zur Fahrspur durch den Aufbau einer Quergeschwindigkeit durch Lenkung der Vorderräder.

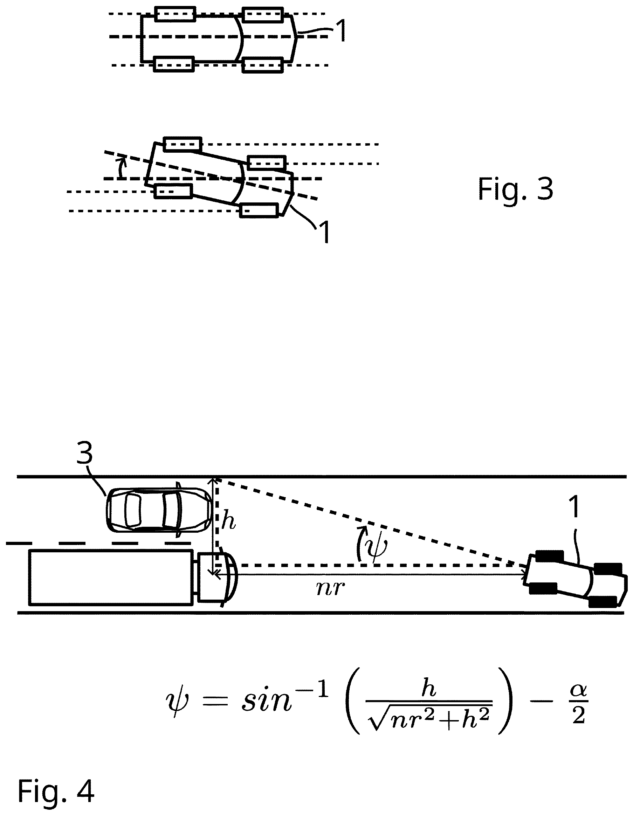

Fig. 3 zeigt diese Gierwinkelauslenkung des Fahrzeugs 1 wie unter Fig. 2 beschriebenen detaillierter. Ist die Gierwinkelauslenkung des Fahrzeugs 1 eingestellt, so weist das Fahrzeug dieselbe Fahrtrichtung wie vor dem Einnehmen der Gierwinkelauslenkung auf, ist jedoch um einen Gierwinkel ausgelenkt, der gegenüber einer Fahrzeuglängsachse durch Drehung um eine Hochachse des Fahrzeugs 1 referenziert ist. In diesem Fall sind die Fahrspuren der Vorderräder und der Hinterräder versetzt zueinander, während sie ohne eine solche Gierwinkelauslenkung im Wesentlichen kongruent sind. Während einer solchen Gierwinkelauslenkung sind damit die Vorderräder und die Hinterräder im gleichen Drehsinn gegenüber der Karosserie des Fahrzeugs 1 ausgelenkt.

Fig. 4 zeigt eine beispielhafte Berechnungsmethode der Steuereinheit, um eine gewünschte Gierwinkelauslenkung, beispielsweise in der Einheit "Grad" oder "rad", zu ermitteln. Demnach ist die Gierwinkelauslenkung variabel und wird situationsabhängig von der Steuereinheit eingestellt. Der notwendige bzw. gewünschte Gierwinkel *ψ* wird hierbei von der Steuereinheit nach folgender Formel berechnet: Es wird der Arkussinus aus dem Verhältnis "lateraler Abstand zwischen der Sensoreinheit und der entfernt gelegenen Spurgrenze der angestrebten Fahrspur" (bezeichnet mit 'h') und der "Wurzel aus der Summe der geforderten Sensorreichweite zum Quadrat und dem lateralen Abstand zwischen der Sensoreinheit und der entfernt gelegenen Spurgrenze der angestrebten Fahrspur zum Quadrat " (wobei die geforderten Sensorreichweite mit nr und der laterale Abstand mit 'h' bezeichnet werden) gebildet, und vom Ergebnis die Hälfte des horizontalen Öffnungswinkels des Sichtbereichs der Sensoreinheit abgezogen wird (wobei der horizontale Öffnungswinkel der Sensoreinheit mit *α* bezeichnet wird). Dabei wird aus der erwarteten maximalen Geschwindigkeit des weiteren Verkehrsteilnehmers 3 auf der angestrebten Fahrspur die Fahrgeschwindigkeit des eigenen Fahrzeugs 1 subtrahiert, um die relevante Differenzgeschwindigkeit zu ermitteln. Die notwendige Reichweite nr wird hierbei berechnet als als Produkt der prognostizierten Dauer des Spurwechsels mit der relevanten Differenzgeschwindigkeit, addiert mit einem verbleibenden Sicherheitsabstand, wovon optional die zu erwartende Verzögerung des weiteren Verkehrsteilnehmers 3 als Überholender abgezogen werden kann. Der Abstand h wird bei gekrümmter Fahrbahn (Verlauf bekannt aus ADAS Spurerkennung und ggf. Karteninformationen) anhand des Maximalabstands entlang des Verlaufs innerhalb der Distanz nr berechnet. Hierbei bleibt die laterale Verschiebung der Position der Sensoreinheit durch Drehung des Fahrzeugs 1 um den vorliegenden Momentanpol aufgrund kleiner Winkel und Laufzeitoptimierung beispielhaft unberücksichtigt. Es kann jedoch ebenso berücksichtigt werden. Dabei wird die Berechnung der Gierwinkelauslenkung mithilfe eines Einspurmodells eingeregelt.

Obwohl die Erfindung im Detail durch bevorzugte Ausführungsbeispiele näher illustriert und erläutert wurde, ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

## Patentansprüche

1. System zum Überprüfen eines geplanten Spurwechsels eines Fahrzeugs (1) mit Allradlenkung auf einer mehrspurigen Straße, aufweisend eine Sensoreinheit und eine Steuereinheit, wobei die Sensoreinheit mit ihrem Sichtbereich zum Erfassen eines sich von hinten an das Fahrzeug (1) annähernden Verkehrsteilnehmers (3) dient und zum Übermitteln von Sensordaten an die Steuereinheit ausgeführt ist, **dadurch gekennzeichnet, dass** die Steuereinheit dazu ausgeführt ist, eine Allradlenkung des Fahrzeugs (1) so anzusteuern, dass mit im selben Drehsinn gegenüber dem Fahrzeug (1) ausgelenkten Vorderrädern und Hinterrädern eine Versetzung einer Fahrspur der Hinterräder gegenüber einer Fahrspur der Vorderräder erfolgt, um durch eine aufgrund der Versetzung erzeugte Gierwinkelauslenkung des Fahrzeugs (1) gegenüber einer kinematischen Fahrtrichtung den Sichtbereich der Sensoreinheit auf eine mit dem geplanten Spurwechsel angestrebte Fahrspur zu verschwenken.

2. System nach Anspruch 1,
wobei die Steuereinheit dazu ausgeführt ist, die Allradlenkung des Fahrzeugs (1) in einer ersten Phase zum entgegengerichteten Einschlagen der Vorderräder und der Hinterräder zum Aufbauen der Gierwinkelauslenkung des Fahrzeugs (1) anzusteuern, und in einer zweiten, auf die ersten Phase folgenden, Phase die Allradlenkung anzusteuern, um die Vorderräder und die Hinterräder parallel zueinander auszurichten, um einen Einfluss der in der ersten Phase erzeugten Gierwinkelauslenkung auf eine Querbeschleunigung des Fahrzeugs (1) zu verhindern.

3. System nach einem der vorhergehenden Ansprüche,
wobei die Steuereinheit dazu ausgeführt ist, eine aktuelle Sichtweite der Sensoreinheit auf die mit dem Spurwechsel angestrebte Fahrspur zu ermitteln, die Sichtweite mit einem vorgegebenen Grenzwert zu vergleichen und nur bei Unterschreiten des vorgegebenen Grenzwerts die Allradlenkung des Fahrzeugs (1) mit dem Ziel der Erreichung einer Gierwinkelauslenkung des Fahrzeugs (1) gegenüber der kinematischen Fahrtrichtung anzusteuern.

4. System nach einem der vorhergehenden Ansprüche,
wobei die Steuereinheit dazu ausgeführt ist, die Allradlenkung zum Beibehalten der Gierwinkelauslenkung des Fahrzeugs (1) gegenüber der kinematischen Fahrtrichtung stationär für eine vorgegebene Zeitdauer anzusteuern.

5. System nach einem der vorhergehenden Ansprüche,
wobei die Steuereinheit dazu ausgeführt ist, einen sicheren Spurwechsel zu erkennen, wenn kein sich dem eigenen Fahrzeug (1) nähernder Verkehrsteilnehmer (3) im Sichtbereich der Sensoreinheit nach Erzeugung der Gierwinkelauslenkung des Fahrzeugs (1) erkannt wird, und bei Erkennung des sicheren Spurwechsels die Allradlenkung zum Durchführen des Spurwechsels anzusteuern.

6. System nach Anspruch 5,
wobei die Steuereinheit dazu ausgeführt ist, zum Durchführen des Spurwechsels einen Auslenkungswinkel der Hinterräder gegenüber dem Fahrzeug (1) zumindest soweit zu verringern, bis sich die Versetzung der Fahrspur der Hinterräder gegenüber der Fahrspur der Vorderräder auflöst.

7. System nach einem der vorhergehenden Ansprüche,
wobei die Steuereinheit dazu ausgeführt ist, die Gierwinkelauslenkung des Fahrzeugs (1) gegenüber einer kinematischen Fahrtrichtung abhängig von einer vorgegebenen Sichtweite der Sensoreinheit auf die mit dem Spurwechsel angestrebte Fahrspur vorzugeben und die Allradlenkung entsprechend anzusteuern.

8. System nach Anspruch 7,
wobei die Steuereinheit dazu ausgeführt ist, die vorgegebene Sichtweite abhängig von einer höchstzulässigen Geschwindigkeit auf einem aktuell oder zukünftig vom Fahrzeug (1) befahrenen Abschnitt der Straße, von einer aktuellen Geschwindigkeit des Fahrzeugs (1) und/oder von einer erwarteten Geschwindigkeit eines auf der mit dem Spurwechsel angestrebten Fahrspur befindlichen weiteren Verkehrsteilnehmers (3) relativ zum eigenen Fahrzeug (1) zu ermitteln.

9. System nach einem der vorhergehenden Ansprüche,
wobei die Steuereinheit dazu ausgeführt ist, die Gierwinkelauslenkung des Fahrzeugs (1) gegenüber der kinematischen Fahrtrichtung abhängig von einem aktuellen Kurvenradius der Straße zu vorzugeben.

10. System nach einem der vorhergehenden Ansprüche,
wobei die Steuereinheit dazu ausgeführt ist, die Gierwinkelauslenkung des Fahrzeugs (1) durch Ansteuerung der Allradlenkung für einen maximal vorgegebenen Zeitraum beizubehalten.

11. Fahrzeug (1) mit einem System nach einem der vorhergehenden Ansprüche, wobei der Sichtbereich der Sensoreinheit gegen eine Hauptfahrtrichtung des Fahrzeugs (1) ausgerichtet ist, um sich von hinten an das Fahrzeug (1) annähernde Verkehrsteilnehmer (3) erfassen zu können.

## Claims

1. System for checking a planned lane change of a vehicle (1) having all-wheel steering, on a multi-lane road, which system comprises a sensor unit and a control unit, wherein the sensor unit is used to capture, by means of its visual range, a road user (3) approaching the vehicle (1) from behind and is designed to transmit sensor data to the control unit, **characterized in that** the control unit is designed to control the all-wheel steering of the vehicle (1) in such a way that, when the front and rear wheels are deflected in the same direction of rotation relative to the vehicle (1), a driving lane of the rear wheels is displaced relative to a driving lane of the front wheels in order to pivot the visual range of the sensor unit to a driving lane intended for the planned lane change, as a result of a yaw angle deflection of the vehicle (1), relative to a kinematic direction of travel, generated due to the displacement.

2. System according to claim 1,
wherein the control unit is designed to control the all-wheel steering of the vehicle (1) in a first phase to perform a counter turn of the front wheels and the rear wheels to generate the yaw angle deflection of the vehicle (1), and in a second phase, following the first phase, to control the all-wheel steering to align the front wheels and the rear wheels parallel to one another in order to prevent the yaw angle deflection generated in the first phase from influencing the lateral acceleration of the vehicle (1).

3. System according to either of the preceding claims,
wherein the control unit is designed to ascertain a current visibility of the sensor unit onto the driving lane intended for the lane change, to compare the visibility with a specified limit value and, only if the visibility falls below the specified limit value, to control the all-wheel steering of the vehicle (1) with the aim of achieving a yaw angle deflection of the vehicle (1) relative to the kinematic direction of travel.

4. System according to any of the preceding claims,
wherein the control unit is designed to control the all-wheel steering for a specified amount of time in order to keep the yaw angle deflection of the vehicle (1) stationary relative to the kinematic direction of travel.

5. System according to any of the preceding claims,
wherein the control unit is designed to detect a safe lane change when no road user (3) approaching the ego vehicle (1) is detected in the visual range of the sensor unit after the yaw angle deflection of the vehicle (1) has been generated, and, upon detection of the safe lane change, to control the all-wheel steering to carry out the lane change.

6. System according to claim 5,
wherein the control unit, in order to carry out the lane change, is designed to reduce a deflection angle of the rear wheels relative to the vehicle (1) at least until the offset of the driving lane of the rear wheels relative to the driving lane of the front wheels is eliminated.

7. System according to any of the preceding claims,
wherein the control unit is designed to specify the yaw angle deflection of the vehicle (1) relative to a kinematic direction of travel, depending on a specified visibility of the sensor unit onto the driving lane intended for the lane change and to control the all-wheel steering accordingly.

8. System according to claim 7,
wherein the control unit is designed to ascertain the specified visibility depending on a maximum permissible speed on a portion of the road traveled by the vehicle (1), currently or in the future, depending on a current speed of the vehicle (1) and/or depending on an expected speed of another road user (3), located in the driving lane intended for the lane change, relative to the ego vehicle (1).

9. System according to any of the preceding claims,
wherein the control unit is designed to specify the yaw angle deflection of the vehicle (1) relative to the kinematic direction of travel depending on a current curve radius of the road.

10. System according to any of the preceding claims,
wherein the control unit is designed to maintain the yaw angle deflection of the vehicle (1) by controlling the all-wheel steering for a maximum specified amount of time.

11. Vehicle (1) comprising a system according to any of the preceding claims, wherein the visual range of the sensor unit is oriented counter to a main direction of travel of the vehicle (1) in order to be able to capture road users (3) approaching the vehicle (1) from behind.

## Revendications

1. Système pour le contrôle d'un changement de voie planifié d'un véhicule (1) à direction intégrale sur une route à plusieurs voies, présentant une unité formant capteur et une unité de commande, dans lequel l'unité formant capteur sert, avec sa portée optique, à détecter un usager de la voie publique (3) s'approchant du véhicule (1) par l'arrière et est configurée pour transmettre des données de capteur à l'unité de commande, **caractérisé en ce que** l'unité de commande est configurée pour commander une direction intégrale du véhicule (1) de sorte qu'avec des roues avant et des roues arrière déviées dans le même sens de rotation par rapport au véhicule (1), un décalage d'une voie de circulation des roues arrière par rapport à une voie de circulation des roues avant est effectué afin de faire pivoter la portée optique de l'unité formant capteur sur une voie de circulation visée par le changement de voie planifié, grâce à une déviation d'angle de lacet du véhicule (1) par rapport à une direction de circulation cinématique, générée en raison du décalage.

2. Système selon la revendication 1,
dans lequel l'unité de commande est configurée pour commander la direction intégrale du véhicule (1) dans une première phase pour braquer les roues avant et les roues arrière dans des directions opposées pour l'établissement de la déviation d'angle de lacet du véhicule (1) et, dans une seconde phase suivant la première phase, pour commander la direction intégrale afin d'aligner les roues avant et les roues arrière parallèlement les unes aux autres afin d'empêcher une influence de la déviation d'angle de lacet générée dans la première phase sur une accélération transversale du véhicule (1).

3. Système selon l'une des revendications précédentes,
dans lequel l'unité de commande est configurée pour déterminer une distance de visibilité actuelle de l'unité formant capteur sur la voie de circulation visée par le changement de voie, pour comparer la distance de visibilité à une valeur limite prédéfinie et pour commander la direction intégrale du véhicule (1) uniquement lorsque la valeur limite prédéfinie n'est pas atteinte, dans le but d'obtenir une déviation d'angle de lacet du véhicule (1) par rapport à la direction de circulation cinématique.

4. Système selon l'une des revendications précédentes,
dans lequel l'unité de commande est configurée pour commander la direction intégrale pour maintenir la déviation d'angle de lacet du véhicule (1) par rapport à la direction de circulation cinématique de manière stationnaire pendant une période de temps prédéfinie.

5. Système selon l'une des revendications précédentes,
dans lequel l'unité de commande est configurée pour reconnaître un changement de voie sûr si aucun usager de la voie publique (3) s'approchant du propre véhicule (1) n'est reconnu dans la portée optique de l'unité formant capteur après la génération de la déviation d'angle de lacet du véhicule (1) et, en cas de reconnaissance du changement de voie sûr, pour commander la direction intégrale pour mettre en œuvre le changement de voie.

6. Système selon la revendication 5,
dans lequel l'unité de commande est configurée pour, afin de mettre en œuvre le changement de voie, réduire un angle de déviation des roues arrière par rapport au véhicule (1) au moins jusqu'à ce que le décalage de la voie de circulation des roues arrière par rapport à la voie de circulation des roues avant se résorbe.

7. Système selon l'une des revendications précédentes,
dans lequel l'unité de commande est configurée pour prédéfinir la déviation d'angle de lacet du véhicule (1) par rapport à une direction de circulation cinématique en fonction d'une distance de visibilité prédéfinie de l'unité formant capteur sur la voie de circulation visée par le changement de voie et pour commander la direction intégrale en conséquence.

8. Système selon la revendication 7,
dans lequel l'unité de commande est configurée pour déterminer la distance de visibilité prédéfinie en fonction d'une vitesse maximale autorisée sur un tronçon de la route actuellement ou prochainement emprunté par le véhicule (1), d'une vitesse actuelle du véhicule (1) et/ou d'une vitesse attendue d'un autre usager de la voie publique (3) se trouvant sur la voie de circulation visée par le changement de voie par rapport au propre véhicule (1).

9. Système selon l'une des revendications précédentes,
dans lequel l'unité de commande est configurée pour prédéfinir la déviation d'angle de lacet du véhicule (1) par rapport à la direction de circulation cinématique en fonction d'un rayon de courbure actuel de la route.

10. Système selon l'une des revendications précédentes,
dans lequel l'unité de commande est configurée pour maintenir la déviation d'angle de lacet du véhicule (1) en commandant la direction intégrale pendant une durée maximale prédéfinie.

11. Véhicule (1) comportant un système selon l'une des revendications précédentes, dans lequel la portée optique de l'unité formant capteur est alignée dans le sens opposé à une direction de circulation principale du véhicule (1) afin de pouvoir détecter des usagers de la voie publique (3) qui s'approchent du véhicule (1) par l'arrière.
